# FASCICULE DE BREVET EUROPEEN

(11) **EP 0 383 640 B1**
(45) Date de publication et mention de la délivrance du brevet: **10.04.1996**
(21) Numéro de dépôt: 90400138.5
(22) Date de dépôt: 18.01.1990
(51) Int. Cl.: C09K 3/22, C02F 1/68

(54) **Procédé pour absorber des produits polluants organiques**
Verfahren zum Aufsaugen von verunreinigenden Produkten
Process for absorbing harmful organic products

(30) Priorité: 14.02.1989 FR 8901891
(43) Date de publication de la demande: 22.08.1990
(73) Titulaire: ELF ATOCHEM S.A., F-92800 Puteaux (FR)
(72) Inventeur: Stein, Claude, F-60270 Gouvieux (FR); Duquenne, Daniel, F- 60600 Clermont (FR)
(74) Mandataire: Rochet, Michel

(56) Documents cités:
- WO-A-88/06141
- DE-A- 2 229 361
- FR-A- 2 288 709

## Description

La présente invention se rapporte au domaine de la dépollution de surfaces liquides ou solides et plus particulièrement à un procédé pour absorber des produits polluants organiques.

Le brevet FR-A-2 288 709 décrit un procédé d'enlèvement et de récupération de produits pétroliers, notamment d'hydrocarbures lourds, répandus sur une surface liquide ou solide par mise en contact, avec ledit produit pétrolier, d'un polymère finement divisé capable de produire avec le produit pétrolier une pellicule possédant une résistance suffisante pour pouvoir être tractée, puis enlèvement de ladite pellicule par des moyens mécaniques. Un polymère préféré pour la mise en oeuvre de ce procédé est un polymère du bicyclo(2.2.1)heptène-2 ou de son dérivé méthylé, ces polymères formant avec les hydrocarbures pétroliers une pellicule cohérente pouvant contenir jusqu'à 10 parties en poids de produits pétroliers pour une partie de polymère. La mise en contact du polymère avec le produit pétrolier s'effectue, selon ce procédé connu, par simple saupoudrage du polymère à la surface dudit produit.

Par ailleurs, dans certains cas, notamment celui des huiles de transformateurs et celui d'hydrocarbures légers tels que fuel domestique, solvants, benzène, toluène et xylènes, le pouvoir absorbant du polymère de bicyclo(2.2.1)heptène-2 peut atteindre 15 et même 40 parties en poids d'hydrocarbure pour 1 partie de polymère, tout en conduisant à des absorbats secs, dépourvus de toute exsudation ultérieure de l'hydrocarbure même sous une pression de 3 à 70 bars. De tels absorbats n'ont cependant plus une cohésion suffisante pour pouvoir être enlevés sous forme de pellicule tractable. Il s'agit plutôt de masses semi-agglomérées se présentant sous une forme de gélatine difficile à ramasser et/ou à évacuer.

Enfin, la mise en oeuvre du procédé selon le brevet FR-A-2 288 709 se heurte, d'une part, à l'insuffisance de la cinétique d'absorption des hydrocarbures et/ou des huiles de transformateurs par le polymère de bicyclo(2.2.1)heptène-2, d'autre part, au vieillissement de ce polymère à l'issue d'un stockage prolongé.

La demanderesse a trouvé que les problèmes évoqués ci-dessus, liés à la structure de certains absorbats, à la cinétique d'absorption et/ou au vieillissement du polymère, peuvent être judicieusement surmontés, grâce à la présente invention, en plastifiant ledit polymère.

La demande de brevet WO 88/06 141 s'intéresse principalement, en vue de résoudre les problèmes posés par l'épandage d'un polymère en poudre par temps de vent, à la manière dont ce polymère entre en contact avec les produits polluants à absorber et propose d'améliorer l'efficacité du polymère en l'enfermant dans une housse à maille fine.

Enfin, le brevet allemand n^{o} 2 229 361 décrit un procédé pour lier des constituants huileux consistant à répandre sur eux un granulat hydrophobe à haute porosité.

La présente invention consiste donc en un procédé pour enlever des produits polluants organiques répandus sur une surface liquide ou solide par saupoudrage d'un polymère choisi parmi le polybicyclo(2.2.1)heptène-2 et le polyméthyl-5-bicyclo(2.2.1)heptène-2, caractérisé en ce que ledit polymère est préalablement aggloméré par au moins un agent lui impartissant une certaine plastification.

Selon la présente invention, le polymère plastifié utilisé, se présentant sous forme d'une poudre grossière de densité apparente comprise entre 0,15 et 0,50 environ, et de dimension de particules généralement comprise entre 0,5 et 10 mm environ, est obtenu par agglomération de polybicyclo(2.2.1)heptène-2 en poudre au moyen d'un agent lui impartissant une certaine plastification, tel que des composés peu volatils ayant un point de congélation inférieur à -30°C, ne contenant pas d'insaturation éthylénique et choisis parmi les esters organiques dérivés des alcools aliphatiques et cyclaniques, les hydrocarbures aliphatiques, aromatiques et naphténiques et leurs mélanges, en particulier le dioctylphtalate, le dioctylsébacate, le butyl oléate, les adipates, les huiles anthracéniques, l'huile de chrysène, les hydrogénats de fractions de goudrons ayant des points d'ébullition entre 190° et 500°C, les alkylbenzènes, etc. La proportion de l'agent de plastification par rapport au polymère en poudre peut être comprise entre 0,5 et 50% en poids, et, de préférence, entre 5 et 35% en poids environ.

Le polymère aggloméré utilisé peut en outre comprendre les adjuvants usuels suivants :
- au moins un agent anti-mottant tel qu'un stéarate métallique, en une proportion allant jusqu'à 5% en poids par rapport au polymère,
- au moins un colorant en proportion habituelle,
- au moins un déodorant en proportion habituelle,
- au moins une charge minérale telle que talc, silice, argile, alumine, craie ou cendre volante, ou bien une charge organique telle qu'un polymère d'oléfine ou de styrène, fibreux ou en poudre, régénéré ou non, compact ou expansé, ou bien un agent végétal.

Le procédé selon l'invention est notamment applicable sur une surface liquide telle que celle d'une mer, d'un lac ou d'un cours d'eau lorsque des produits polluants organiques y ont été malencontreusement déversés. Il est également applicable sur une surface solide, telle qu'un sol sur lequel une machine (par exemple compresseur hydraulique) laisse fuir de l'huile. Ce procédé est plus particulièrement applicable au cas où le produit polluant organique est un produit pétrolier ou carbochimique, notamment un hydrocarbure, un lubrifiant, un fluide hydraulique, un solvant ou une huile de créosote. Pour la mise en oeuvre du procédé, on tiendra compte de la capacité d'absorption de produits polluants par le polymère aggloméré de bicyclo(2.2.1)heptène-2 qui varie fortement d'une fraction d'hydrocarbures à une autre : alors qu'elle atteint généralement de l'ordre de 1 à 10 parties en poids d'hydrocarbure pour 1 partie en poids de polymère dans le cas des hydrocarbures lourds, comme mentionné par le brevet FR-A-2 288 709 cité précédemment, on a découvert de manière surprenante qu'elle peut atteindre jusqu'à 40 parties en poids d'hydrocarbures pour 1 partie en poids de polymère aggloméré dans le cas d'huiles de transformateurs et d'hydrocarbures plus légers tels que fuel domestique, benzène, toluène, xylènes, styrène et divinylbenzène.

Pour cette raison, lorsque le produit polluant organique est un produit pétrolier, on utilise une quantité de polymère aggloméré comprise entre 1:40 et 1 fois la quantité de produit polluant à absorber.

Le temps nécessaire à l'absorption des produits polluants organiques par le polymère aggloméré dépend, d'une part, de la nature chimique desdits produits polluants, d'autre part, de leur mode de répartition, compacte ou dispersée, sur la surface polluée. En ce qui concerne ces produits pétroliers, ce temps dépend de leur viscosité et leur aromaticité. Pour des produits légers hautement aromatiques, ce temps est généralement compris entre 5 secondes et 1 heure environ, à température ambiante. Dans tous les cas, le temps nécessaire à l'absorption de produits polluants organiques par le polymère aggloméré est avantageusement inférieur au temps requis par l'emploi d'un polymère en poudre non aggloméré.

Les exemples ci-après sont donnés à titre illustratif et non limitatif de la présente invention.

### EXEMPLE 1 (comparatif)

Dans un bac à fond plat de 50 cm de long et de 30 cm de large, on introduit 1,5 kg de fuel oil domestique à température ambiante. On saupoudre sur la nappe de fuel oil, d'une manière régulièrement répartie, 150 grammes de polybicyclo(2.2.1)heptène-2 en poudre de granulométrie 0 à 0,8 mm et de densité apparente 0,35 additionné de 1% d'acide stéarique et commercialisé par la Société NORSOLOR sous la marque "NORSOREX AP". On note le temps tp (en minutes) après le saupoudrage, au bout duquel tout le fuel oil est solidifié, c'est-à-dire au bout duquel une inclinaison du bac à 20° d'angle ne conduit plus à un écoulement de fuel oil libre.

On reproduit cette expérience avec plusieurs échantillons de "NORSOREX AP" se distinguant par une durée de stockage ts (en mois) variable à dater de sa production.

Les résultats sont indiqués au tableau I.

**TABLEAU I**

| | | | | |
|---|---|---|---|---|
| ts | 1 | 2 | 8 | 15 |
| tp | 18 | 25 | 65 | 125 |

### EXEMPLE 2

On réalise dans un mélangeur à poudre dit planétaire (marque LANCELIN), à température ambiante, un mélange de 100 parties en poids de "NORSOREX AP" fraîchement préparé, avec 15 parties en poids d'huile pétrolière naphténique commercialisée par la Société NYNAS sous la marque "NYTEX-00". On ajoute, en cours de mélangeage, 0,2 partie en poids de colorant vert cromophtal GFN de la Société CIBA-GEIGY et une partie en poids d'antioxydant "IRGANOX 1076" de la Société CIBA-GEIGY.

Le polymère a absorbé l'huile au bout de 10 minutes de mélangeage et se présente alors sous la forme de particules de 0,5-2 mm et possède une densité en vrac de 0,30 (Produit A).

On reproduit avec ce produit les expériences de l'exemple 1 en remplaçant le "NORSOREX AP" par le poids identique de Produit A ayant subi au préalable des durées de stockage ts (en mois) variables à dater de sa préparation.

Les temps tp (en minutes) de solidification totale de fuel oil domestique en fonction de l'âge du Produit A sont donnés dans le tableau II.

**TABLEAU II**

| | | | | |
|---|---|---|---|---|
| ts | 1 | 2 | 8 | 15 |
| tp | 18 | 20 | 23 | 26 |

### EXEMPLE 3

On reproduit la procédure de l'exemple 2, à l'exception suivante près : la quantité d'huile naphténique utilisée est de 30 parties en poids au lieu de 15 parties.

Dans ces conditions, le mélangeage se présente sous forme de particules de 0,5-10 mm et possède une densité en vrac de 0,25 (Produit B).

Les temps tp de solidification du fuel oil domestique en fonction de la durée de stockage préalable ts du produit B sont donnés au tableau III.

**TABLEAU III**

| | | | | |
|---|---|---|---|---|
| ts | 1 | 2 | 8 | 15 |
| tp | 16 | 18 | 20 | 22 |

## Revendications

1. Procédé pour enlever des produits polluants organiques répandus sur une surface liquide ou solide par saupoudrage d'un polymère choisi parmi le polybicyclo(2.2.1) heptène-2 et le polyméthyl-5-bicyclo(2.2.1)heptène-2, caractérisé en ce que ledit polymère est préalablement aggloméré par au moins un agent lui impartissant une certaine plastification.

2. Procédé selon la revendication 1, caractérisé en ce que ledit agent est choisi parmi les composés peu volatils ayant un point de congélation inférieur à -30°C, ne contenant pas d'insaturation éthylénique et choisis parmi les esters organiques dérivés des alcools aliphatiques et cyclaniques, les hydrocarbures aliphatiques aromatiques et naphténiques et leurs mélanges.

3. Procédé selon l'une des revendications 1 ou 2, caractérisé en ce que la proportion dudit agent par rapport au polymère est comprise entre 0,5 et 50% en poids.

4. Procédé selon l'une des revendications 1 à 3, caractérisé en ce que ledit polymère présente une dimension de particules comprise entre 0,5 et 10 mm.

5. Procédé selon l'une des revendications 1 à 4, caractérisé en ce que ledit polymère présente une densité apparente comprise entre 0,15 et 0,50.

6. Procédé selon l'une des revendications 1 à 5, caractérisé en ce que le produit polluant organique est un produit pétrolier ou carbochimique.

7. Procédé selon la revendication 6, caractérisé en ce que ledit produit pétrolier ou carbochimique est choisi parmi les hydrocarbures, lubrifiants, fluides hydrauliques, solvants et huiles de créosote.

8. Procédé selon la revendication 1, caractérisé en ce que la quantité de polymère aggloméré utilisée est comprise entre 1:40 et 1 fois la quantité de produit polluant organique.

9. Procédé selon la revendication 3, caractérisé en ce que la proportion dudit agent par rapport au polymère est comprise entre 5 et 35% en poids.

10. Procédé selon l'une des revendications 1 ou 2, caractérisé en ce que le polymère aggloméré comprend en outre au moins un agent anti-mottant.

11. Procédé selon la revendication 10, caractérisé en ce que comme agent anti-mottant, on utilise un stéarate métallique.

## Patentansprüche

1. Verfahren, um verschmutzende, auf einer flüssigen oder festen Oberfläche verteilte organische Produkte zu entfernen, indem man sie mit einem Polymer bestäubt, das ausgewählt ist aus Polybicyclo[2.2.1]-2-hepten und Polymethyl-5-bicyclo[2.2.1]-2-hepten, dadurch gekennzeichnet, daß das Polymere vorher mittels mindestens eines Reagenzes, das ihm eine bestimmte Plastifizierung zukommen läßt, agglomeriert wird.

2. Verfahren nach Anspruch 1, dadurch gekennzeichnet, daß das Reagenz ausgewählt ist aus geringflüchtigen Verbindungen mit einem Erstarrungspunkt unterhalb von -30 °C, die nicht ethylenisch ungesättigt sind und aus von aliphatischen Alkoholen und Cyclohexylalkoholen abgeleiteten organischen Estern, aliphatischen, aromatischen und naphthenischen Kohlenwasserstoffen und deren Mischungen ausgewählt sind.

3. Verfahren nach einem der Ansprüche 1 oder 2, dadurch gekennzeichnet, daß die Menge des Reagenzes, bezogen auf das Polymer, zwischen 0,5 und 50 Gew.-% beträgt.

4. Verfahren nach einem der Ansprüche 1 bis 3, dadurch gekennzeichnet, daß das Polymere eine Teilchengröße zwischen 0,5 und 10 mm aufweist.

5. Verfahren nach einem der Ansprüche 1 bis 4, dadurch gekennzeichnet, daß das Polymere eine scheinbare Dichte zwischen 0,15 und 0,50 aufweist.

6. Verfahren nach einem der Ansprüche 1 bis 5, dadurch gekennzeichnet, daß das verschmutzende organische Produkt ein Erdölprodukt oder ein carbochemisches Produkt ist.

7. Verfahren nach Anspruch 6, dadurch gekennzeichnet, daß das Erdölprodukt oder carbochemische Produkt ausgewählt ist aus Kohlenwasserstoffen, Schmiermitteln, Hydraulikflüssigkeiten, Lösemitteln und Kreosotölen.

8. Verfahren nach Anspruch 1, dadurch gekennzeichnet, daß die Menge des verwendeten agglomerierten Polymeren die 1 : 40fache bis 1fache Menge des verschmutzenden organischen Produkts darstellt.

9. Verfahren nach Anspruch 3, dadurch gekennzeichnet, daß die Menge des Reagenzes, bezogen auf das Polymere, zwischen 5 und 35 Gew.-% beträgt.

10. Verfahren nach einem der Ansprüche 1 oder 2, dadurch gekennzeichnet, daß das Polymere außerdem mindestens ein die Verklumpung verhinderndes Reagenz enthält.

11. Verfahren nach Anspruch 10, dadurch gekennzeichnet, daß man als die Verklumpung verhinderndes Reagenz ein Metallstearat verwendet.

## Claims

1. Process for removing pollutant organic products covering a liquid or solid surface, by dusting with a polymer chosen from polybicyclo(2.2.1)hept-2-ene and polymethyl-5-bicyclo(2.2.1)hept-2-ene, characterized in that the said polymer is preagglomerated using at least one agent which imparts a certain level of plasticization to the polymer.

2. Process according to Claim 1, characterized in that the said agent is chosen from relatively nonvolatile compounds having a freezing point of below -30°C, containing no ethylenic unsaturation and chosen from organic esters derived from aliphatic and cyclanic alcohols, aliphatic, aromatic and naphthenic hydrocarbons, and mixtures thereof.

3. Process according to either of Claims 1 and 2, characterized in that the proportion of the said agent relative to the polymer is between 0.5 and 50% by weight.

4. Process according to one of Claims 1 to 3 characterized in that the said polymer has a particle size of between 0.5 and 10 mm.

5. Process according to one of Claims 1 to 4, characterized in that the said polymer has an apparent density of between 0.15 and 0.50.

6. Process according to one of Claims 1 to 5, characterized in that the pollutant organic product is a petroleum or carbochemical product.

7. Process according to Claim 6, characterized in that the said petroleum or carbochemical product is chosen from hydrocarbons, lubricants, hydraulic fluids, solvents and creosote oils.

8. Process according to Claim 1, characterized in that the amount of agglomerated polymer used is between 1:40 and 1 times the amount of pollutant organic product.

9. Process according to Claim 3, characterized in that the proportion of the said agent relative to the polymer is between 5 and 35% by weight.

10. Process according to either of Claims 1 and 2, characterized in that the agglomerated polymer also comprises at least one anticaking agent.

11. Process according to Claim 10, characterized in that a metal stearate is used as anticaking agent.
